# EUROPÄISCHE PATENTANMELDUNG

(11) **EP 4 020 354 A1**
(43) Veröffentlichungstag der Anmeldung: **29.06.2022**
(21) Anmeldenummer: 21208223.4
(22) Anmeldetag: 15.11.2021
(51) Int. Cl.: G06Q 10/08, G06Q 50/28

(54) **VERFAHREN ZUR AUTOMATISCHEN PROTOKOLLIERUNG EINER FRACHTÜBERGABE IN EINEM ELEKTRONISCHEN FRACHTPAPIERSYSTEM, PROTOKOLLEINRICHTUNG UND FAHRZEUG**

(30) Priorität: 22.12.2020 DE 102020216510
(71) Anmelder: Continental Automotive GmbH, 30165 Hannover (DE)
(72) Erfinder: Ketterer, Timo, 60488 Frankfurt am Main (DE); Bertl, Svenja, 60488 Frankfurt am Main (DE)
(74) Vertreter: Continental Corporation

(57) **Zusammenfassung**

Die Erfindung betrifft ein Verfahren zur automatischen Protokollierung einer Frachtübergabe in einem elektronischen Frachtpapiersystem (1), das zumindest eine Protokolleinrichtung (2) eines Fahrzeugs (3) und einen fahrzeugexternen Zentralrechner (4) umfasst, wobei in dem elektronischen Frachtpapiersystem (1) ein geographisches Frachtübergabegebiet (7) eines Übergabepartners gespeichert wird, durch das elektronische Frachtpapiersystem (1) fortlaufend eine momentane geographische Position des Fahrzeugs (3) erfasst wird, und durch das elektronische Frachtpapiersystem (1) eine Ankunft des Fahrzeugs (3) in dem geographischen Frachtübergabegebiet (7) des Übergabepartners erfasst wird. Es ist vorgesehen, dass ein Übergabesignal (10) von der Protokolleinrichtung (2) des Fahrzeugs (3) an einen fahrzeugexternen Zentralrechner (4) ausgesandt wird, wenn ein vorbestimmtes Frachtübergabeereignis, das zumindest die Ankunft des Fahrzeugs (3) in dem geographischen Frachtübergabegebiet (7) des Übergabepartners umfasst, durch die Protokolleinrichtung (2) des Fahrzeugs (3) erfasst wird, und bei Empfang des Übergabesignals (10) durch den fahrzeugexternen Zentralrechner (4) ein Ereignissignal von dem fahrzeugexternen Zentralrechner (4) an eine Recheneinrichtung (5) des Übergabepartners versandt wird.

## Beschreibung

Die Erfindung betrifft ein Verfahren zur automatischen Protokollierung einer Frachtübergabe in einem elektronischen Frachtpapiersystem, eine Protokolleinrichtung und ein Fahrzeug umfassend eine Protokolleinrichtung.

Zur Dokumentation einer Frachtbeförderung werden im Straßenverkehr Frachtbriefe verwendet, in denen die Fracht und die beteiligten Parteien beschrieben sind. In der "Internationalen Vereinbarung über Beförderungsverträge auf Straßen", die auch unter der Bezeichnung CMR-Transportvertrag (von franz.:
Convention relative au contrat de transport international de marchandises par route) bekannt ist, ist der Umfang der in Frachtbriefen enthaltenen Informationen geregelt. Zudem ist durch die Vereinbarung festgelegt, dass es sich bei einem Frachtbrief um eine offizielle Vereinbarung der Parteien handelt. 2008 wurde der CMR-Transportvertrag um das eCMR-Protokoll ergänzt, um eine Verwendung elektronischer Frachtbriefe zu ermöglichen.

Elektronische Frachtpapiere werden zentral von einem Plattformanbieter verwaltet.

Die einzelnen elektronischen Frachtpapiere sind dabei mit einem Identifizierungscode auf einem Zentralrechner des Plattformanbieters hinterlegt, auf den die Parteien einer Frachtübergabe zugreifen können, um den momentanen Status der Lieferung verfolgen zu können. Um Übergaben einer Fracht zu bestätigen ist es erforderlich, eine Übergabe durch einen Fahrer, einen Versender oder einen Empfänger mittels einer elektronischen Unterschrift auf einem Touchscreen oder mittels eines QR-Codes zu bestätigen. Die Digitale Signatur wird daraufhin in den elektronischen Frachtpapieren auf dem Zentralrechner hinterlegt. Durch die Kommunikation der einzelnen Partner mit dem Zentralrechner des Plattformanbieters ist eine Echtzeitverfolgung der Fracht und eine Einsicht in die Lieferkette ermöglicht. Insgesamt werden durch den Einsatz elektronischer Frachtpapiere der Verwaltungsaufwand und die Verwaltungskosten gegenüber Frachtpapieren in Papierform reduziert.

Obwohl durch die Verwendung elektronischer Frachtpapiere gegenüber klassischen Frachtpapieren eine Vereinfachung organisatorischer Prozesse erfolgt, sind immer noch eine Vielzahl manueller Interaktionen zwischen dem Versender, dem Transportunternehmen und dem Empfänger einer Fracht erforderlich. Diese manuellen Interaktionen führen zu Unterbrechungen, Effizienzverlusten sowie Zeitverzögerungen während des Übergabeprozesses. Problematisch hierbei ist insbesondere, dass aufgrund der erforderlichen manuellen Interaktionen eine vollautomatische Übergabe, welche beispielsweise bei späteren autonomen Lieferketten möglich wäre, noch nicht durchgeführt werden kann.

Es ist somit eine Aufgabe der Erfindung, ein Verfahren bereitzustellen, das eine vollautomatische Protokollierung von Frachtübergaben ermöglicht.

Durch die Erfindung wird ein Verfahren zur automatischen Protokollierung einer Frachtübergabe in einem elektronischen Frachtpapiersystem bereitgestellt. Das elektronische Frachtpapiersystem umfasst zumindest eine Protokolleinrichtung eines Fahrzeugs und einen fahrzeugexternen Zentralrechner. Die Protokolleinrichtung kann beispielsweise ein in dem Fahrzeug angeordneter Computer sein. Bei einer Frachtübergabe kann es sich um eine Übergabe einer Fracht von einem Versender an ein Transportunternehmen, von dem Transportunternehmen an einen Frachtempfänger oder zwischen Transportunternehmen einer Lieferkette handeln. Das elektronische Frachtpapiersystem kann beispielsweise nach dem eCMR-Standard gestaltet sein. In dem erfindungsgemäßen Verfahren ist es vorgesehen, dass in dem elektronischen Frachtpapiersystem ein geographisches Frachtübergabegebiet eines Übergabepartners gespeichert wird. Mit anderen Worten ist es vorgesehen, dass in dem elektronischen Frachtpapiersystem das geographische Frachtübergabegebiet gespeichert ist. Das Frachtübergabegebiet ist der Ort, an dem eine Übergabe einer Fracht erfolgen soll. Es kann sich beispielsweise um eine Adresse eines Übergabepartners handeln, wobei es sich beispielsweise um einen Versender einer durch das Fahrzeug einzuladenden Fracht oder einen Empfänger einer durch das Fahrzeug transportierten Fracht handeln kann. Das Frachtübergabegebiet kann georeferenziert und durch Geokoordinaten eines Punktes und einem vorbestimmten Radius vorgegeben sein. Es ist vorgesehen, dass durch die Protokolleinrichtung des Fahrzeugs fortlaufend eine momentane geographische Position des Fahrzeugs erfasst wird. Mit anderen Worten wird durch die Protokolleinrichtung des Fahrzeugs die momentane geographische Position des Fahrzeugs verfolgt. Die Protokolleinrichtung kann zu diesem Zweck dazu eingerichtet sein, Satellitensignale eines oder mehrerer satellitengestützter Ortungssysteme zu empfangen und basierend auf den empfangenen Satellitensignalen eine aktuelle Position des Fahrzeugs zu bestimmen. Durch das elektronische Frachtpapiersystem wird eine Ankunft des Fahrzeugs in dem geographischen Frachtübergabegebiet des Übergabepartners erfasst. Mit anderen Worten wird durch das elektronische Frachtpapiersystem erkannt, dass sich die momentane geographische Position des Fahrzeugs innerhalb des geographischen Frachtübergabegebiets des Übergabepartners befindet.

Es ist vorgesehen, dass ein Übergabesignal von der Protokolleinrichtung des Fahrzeugs an einen fahrzeugexternen Zentralrechner ausgesandt wird, wenn ein vorbestimmtes Frachtübergabeereignis, das zumindest die Ankunft des Fahrzeugs in dem geographischen Frachtübergabegebiet des Übergabepartners umfasst, durch die Protokolleinrichtung des Fahrzeugs erfasst wird. Mit anderen Worten ist es vorgesehen, dass die Protokolleinrichtung des Fahrzeugs das Übergabesignal an den fahrzeugexternen Zentralrechner versendet, sobald durch die Protokolleinrichtung das vorbestimmte Frachtübergabeereignis erfasst wird. Das Frachtübergabeereignis kann vorliegen, wenn eine oder mehrere Bedingungen erfüllt und durch die Protokolleinrichtung des Fahrzeugs erfasst werden. Das Frachtübergabeereignis umfasst zumindest die Ankunft des Fahrzeugs in dem geographischen Frachtübergabegebiet. Mit anderen Worten ist es zur Feststellung eines Frachtübergabeereignisses zumindest erforderlich, dass die aktuelle Position des Fahrzeugs innerhalb des Frachtübergabegebiets des Übergabepartners lokalisiert wird. Bei dem fahrzeugexternen Zentralrechner kann es sich um einen Zentralrechner eines Betreibers eines elektronischen Frachtpapiersystems handeln, der zur Verwaltung der elektronischen Frachtpapiere vorgesehen sein kann. Das Übergabesignal kann beispielsweise über eine kabellose Funkverbindung von der Protokolleinrichtung an den fahrzeugexternen Zentralrechner versandt werden.

Es ist vorgesehen, dass bei Empfang des Übergabesignals durch den fahrzeugexternen Zentralrechner ein Ereignissignal von dem fahrzeugexternen Zentralrechner an eine Recheneinrichtung des Übungsübergabepartners versandt wird. Mit anderen Worten ist es vorgesehen, dass das von der Protokolleinrichtung des Fahrzeugs ausgesandte Übergabesignal von dem fahrzeugexternen Zentralrechner empfangen wird. Durch diesen fahrzeugexternen Zentralrechner wird daraufhin an eine Recheneinrichtung des Übergabepartners das Ereignissignal übersandt. Dies kann beispielsweise über eine kabellose Funkverbindung erfolgen.

Durch die Erfindung ergibt sich der Vorteil, dass eine Übergabe einer Fracht an einen Übergabepartner sowohl automatisch erfasst als auch dem Übergabepartner automatisch mitgeteilt werden kann.

Die Erfindung umfasst auch Weiterbildungen der Erfindung, durch die sich weitere Vorteile ergeben.

Eine Weiterbildung der Erfindung sieht vor, dass das geographische Frachtübergabegebiet in der Protokolleinrichtung gespeichert wird. Durch die Protokolleinrichtung des Fahrzeugs wird die Ankunft des Fahrzeugs in dem geographischen Frachtübergabegebiet des Übergabepartners erfasst. Das Übergabesignal wird von der Protokolleinrichtung des Fahrzeugs an den fahrzeugexternen Zentralrechner ausgesandt, wenn das vorbestimmte Frachtübergabeereignis durch die Protokolleinrichtung des Fahrzeugs erfasst wird. Mit anderen Worten erfolgt die Erkennung, ob sich das Fahrzeug in dem Frachtübergabegebiet befindet durch die Protokolleinrichtung.

Eine Weiterbildung der Erfindung sieht vor, dass das geographische Frachtübergabegebiet in dem fahrzeugexternen Zentralrechner gespeichert wird. Durch die Protokolleinrichtung des Fahrzeugs wird fortlaufend die momentane geographische Position des Fahrzeugs an den fahrzeugexternen Zentralrechner versandt. Durch den fahrzeugexternen Zentralrechner wird die Ankunft des Fahrzeugs in dem geographischen Frachtübergabegebiet des Übergabepartners erfasst. Durch den fahrzeugexternen Zentralrechner wird ein Ankunftssignal über die Ankunft in dem geographischen Frachtübergabegebiet an die Protokolleinrichtung des Fahrzeugs übersandt. Die Protokolleinrichtung des Fahrzeugs empfängt das Ankunftssignal und wird dadurch dazu eingestellt, das Übergabesignal von der Protokolleinrichtung des Fahrzeugs an den fahrzeugexternen Zentralrechner auszusenden, wenn das vorbestimmte Frachtübergabeereignis durch die Protokolleinrichtung des Fahrzeugs erfasst wird. Mit anderen Worten wird die aktuelle Position des Fahrzeugs durch die Protokolleinheit erfasst und an den fahrzeugexternen Zentralrechner versandt. Dadurch wird dem Zentralrechner eine Verfolgung der Fahrzeugposition ermöglicht. Die Erfassung der Ankunft in dem Frachtübergabegebiet erfolgt in dieser Variante durch den fahrzeugexternen Zentralrechner. Die Protokolleinrichtung wird durch das Ankunftssignal über die Ankunft informiert. Durch dieses Signal wird eine Funktion der Protokolleinrichtung zur Übersendung des Übergabesignals aktiviert.

Eine Weiterbildung der Erfindung sieht vor, dass das Frachtübergabeereignis eine manuelle Bestätigung in der Protokolleinrichtung umfasst. Mit anderen Worten wird das Frachtübergabeereignis durch die Protokolleinrichtung erfasst, wenn neben der Ankunft des Fahrzeugs in dem geographischen Frachtübergabegebiet des Übergabepartners eine manuelle vorbestimmte Benutzereingabe durch die Protokolleinrichtung erfasst wird. Es kann beispielsweise vorgesehen sein, dass im Fall eines Erreichens des Übergabegebiets auf einer Anzeige der Protokolleinrichtung eine an einen Fahrer gerichtete Aufforderung dargestellt wird, die Frachtübergabe durch Tätigung einer vorbestimmten Benutzereingabe zu bestätigen. Die vorbestimmte Benutzereingabe kann beispielsweise eine Betätigung eines Touchscreens oder einer Taste der Protokolleinrichtung umfassen. Durch die Weiterbildung ergibt sich der Vorteil, dass die Frachtübergabe durch den Fahrer explizit bestätigt wird. Somit kann verhindert werden, dass eine nicht erfolgte Übergabe fehlerhafterweise als erfolgreiches Frachtübergabeereignis in dem System erfasst wird.

Eine Weiterbildung der Erfindung sieht vor, dass das Frachtübergabeereignis eine Erfassung einer vorbestimmten Gewichtsänderung des Fahrzeugs durch eine Wiegeeinrichtung des Fahrzeugs umfasst. Mit anderen Worten ist es vorgesehen, dass eine Erfassung des Frachtübergabeereignisses erfordert, dass durch die Wiegeeinrichtung erfasst wird, dass sich das Gewicht des Fahrzeugs um ein vorbestimmtes Gewicht geändert hat. Es kann beispielsweise vorgesehen sein, dass in dem digitalen Frachtpapier in der Protokolleinrichtung ein Gewicht der an den Übergabepartner zu übergebenen Fracht gespeichert ist. Wird durch die Wiegeeinrichtung eine Gewichtsänderung des Fahrzeugs erfasst, und durch die Protokolleinrichtung erkannt, dass die Gewichtsänderung betragsmäßig mit dem in dem digitalen Frachtbrief gespeicherten Gewicht übereinstimmt, kann die Protokolleinrichtung das Übergabeereignis für die zugehörige Fracht feststellen, wenn sich das Fahrzeug momentan in dem Übergabegebiet befindet.

Eine Weiterbildung der Erfindung sieht vor, dass durch die Recheneinrichtung des Übergabepartners bei Empfang des Ereignissignals eine Versendung eines Bestätigungssignals an den fahrzeugexternen Zentralrechner angefordert wird, um die Übergabe durch den Übergabepartner zu bestätigen. Mit anderen Worten ist es vorgesehen, dass durch die Recheneinrichtung des Übergabepartners angefordert wird, ein Bestätigungssignal an den fahrzeugexternen Zentralrechner zu versenden. Es kann beispielsweise vorgesehen sein, dass durch die Recheneinrichtung des Übergabepartners über eine Benutzerschnittstelle ein optisches, akustisches und/oder haptisches Signal ausgegeben wird, um den Übergabepartner zur Durchführung einer vorbestimmten Benutzereingabe aufzufordern. Bei der Erfassung der vorbestimmten Benutzereingabe kann das Bestätigungssignal an den fahrzeugexternen Zentralrechner versandt werden. Es kann auch vorgesehen sein, dass die Recheneinrichtung des Übergabepartners zur Verwaltung eines Lagerstands des Übergabepartners eingerichtet ist und bei Empfang des Signals prüft, ob ein Eingang oder ein Abgang der Ware in dem Warenbestand des Übergabepartners erfolgt ist. Dadurch ergibt sich der Vorteil, dass eine Frachtübergabe durch den Übergabepartner bestätigt werden kann.

Eine Weiterbildung der Erfindung sieht vor, dass durch den fahrzeugexternen Zentralrechner beim Empfangen des Bestätigungssignals von dem Übergabepartner ein Antwortsignal an die Protokolleinrichtung des Fahrzeugs versandt wird. Mit anderen Worten ist es vorgesehen, dass die Durchführung der Frachtübergabe durch den Übergabepartner bestätigt wird, was daraufhin den Fahrer des Fahrzeugs mit der Protokolleinrichtung angezeigt werden kann. Dadurch ergibt sich der Vorteil, dass beispielsweise einem Fahrer die Kenntnisnahme und Bestätigung der Frachtübergabe durch den Übergabepartner bestätigt werden kann.

Eine Weiterbildung der Erfindung sieht vor, dass das Übergabesignal eine Fahrerkennung umfasst. Mit anderen Worten umfasst das Übergabesignal eine Kennung, die dem Fahrer des Fahrzeugs eindeutig zugeordnet ist. Dabei kann es sich beispielsweise um eine Fahrerkennung einer Fahrerkarte für einen digitalen Tachographen handeln. Dadurch ergibt sich der Vorteil, dass der Übergabevorgang mit einem Fahrer verknüpft werden kann.

Eine Weiterbildung der Erfindung sieht vor, dass das Übergabesignal eine Übergabekennung umfasst. Mit anderen Worten umfasst das Übergabesignal ein Merkmal, dass eine eindeutige Zuordnung des Signals zum Übergabevorgang ermöglicht. Dadurch ergibt sich der Vorteil dass eine eindeutige Identifikation möglich ist.

Eine Weiterbildung der Erfindung sieht vor, dass die Protokolleinrichtung eine Tachographeneinrichtung ist. Mit anderen Worten handelt es sich bei der Protokolleinrichtung um einen digitalen Fahrtenschreiber. Dadurch ergibt sich der Vorteil, dass als Protokolleinrichtung eine Vorrichtung verwendet wird, welche aufgrund gesetzlicher Vorgaben hohe Sicherheitsanforderungen erfüllt. Dadurch wird sichergestellt, dass das System einen höchstmöglichen Schutz gegen Manipulationen aufweist.

Eine Weiterbildung der Erfindung sieht vor, dass die Protokolleinrichtung eine Telematikeinrichtung umfasst. Mit anderen Worten umfasst die Protokolleinrichtung einen Computer, der dazu eingerichtet ist, mit dem fahrzeugexternen Zentralrechner Daten auszutauschen. Die Telematikeinrichtung kann mit einem Tachographen über eine Schnittstelle verbunden sein, um beispielsweise die aktuelle geographische Position, eine Fahrerkennung oder andere durch digitale Tachographen erfasste Daten aus dem Tachographen auszulesen. Dadurch ergibt sich der Vorteil, dass vorhandene Tachographen durch die Telematikeinrichtung nachgerüstet werden können, um die Protokolleinrichtung für das elektronische Frachtpapiersystem zu erhalten.

Die Erfindung umfasst auch eine Protokolleinrichtung zur automatischen Protokollierung einer Frachtübergabe in einem elektronischen Frachtpapiersystem.

Die Protokolleinrichtung ist dazu eingerichtet, ein geographisches Frachtübergabegebiet eines Übergabepartners zu speichern. Das geographische Frachtübergabegebiet kann beispielsweise in einem digitalen Frachtbrief enthalten sein, der in der Protokolleinrichtung gespeichert ist. Die Protokolleinrichtung kann dazu eingerichtet sein, den digitalen Frachtbrief von einem fahrzeugexternen Zentralrechner zu empfangen. Die Protokolleinrichtung ist dazu eingerichtet, fortlaufend eine momentane geographische Position des Fahrzeugs zu erfassen. Zu diesem Zweck kann die Protokolleinrichtung dazu eingerichtet sein, Satellitensignale satellitengestützter Ortungssysteme zu empfangen und auszuwerten. Die Protokolleinrichtung ist dazu eingerichtet, eine Ankunft des Fahrzeugs in dem geographischen Frachtübergabegebiet des Übergabepartners zu erfassen. Es ist vorgesehen, dass die Protokolleinrichtung dazu eingerichtet ist, ein Übergabesignal an einen fahrzeugexternen Zentralrechner auszusenden, wenn ein vorbestimmtes Frachtübergabeereignis, das zumindest die Ankunft des Fahrzeugs in dem geographischen Frachtübergabegebiet des Übergabepartners umfasst, durch die Protokolleinrichtung des Fahrzeugs erfasst wird.

Die Erfindung umfasst ferner ein Fahrzeug, das zumindest eine Protokolleinrichtung umfasst. Das Fahrzeug kann beispielsweise ein Kraftwagen, insbesondere ein Personenkraftwagen oder ein Nutzfahrzeug, z. B. ein Lastkraftwagen, sein. Das Fahrzeug kann z. B. fahrergeführt oder vollautonom geführt sein.

Zu der Erfindung gehören auch Weiterbildungen der erfindungsgemäßen Protokolleinrichtung und des erfindungsgemäßen Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Protokolleinrichtung und des erfindungsgemäßen Fahrzeugs hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
Fig. 1 einen möglichen Ablauf eines Verfahrens zur automatischen Protokollierung einer Frachtübergabe in einem elektronischen Frachtpapiersystem,
Fig. 2 ein Frachtpapiersystem.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

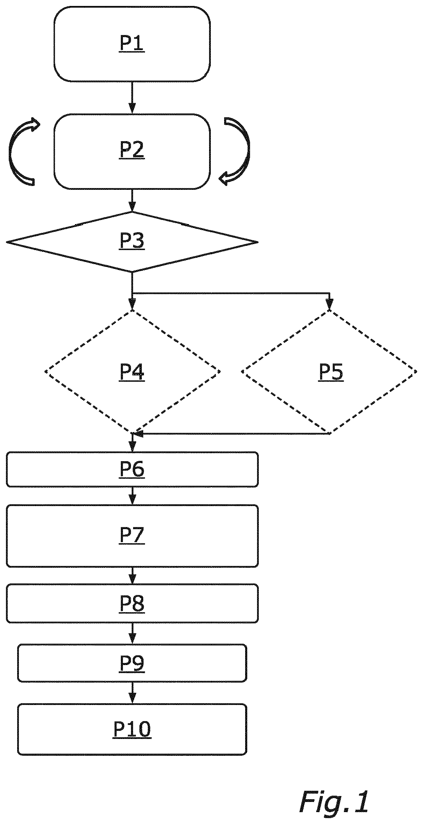

Die Figur 1 zeigt einen möglichen Ablauf eines Verfahren zur automatischen Protokollierung einer Frachtübergabe in einem elektronischen Frachtpapiersystem.

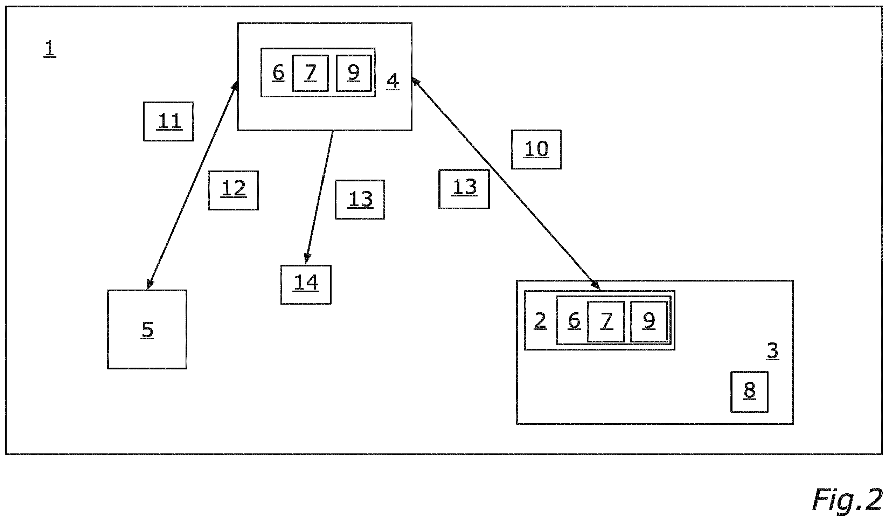

Das Verfahren kann durch ein elektronisches Frachtpapiersystem 1 (siehe Figur 2) durchgeführt werden. Das elektronische Frachtpapiersystem 1 kann eine Protokolleinrichtung 2 in einem Fahrzeug 3 umfassen. Das elektronische Frachtpapiersystem 1 kann zudem einen fahrzeugexternen Zentralrechner 4 umfassen, wobei es sich um einen Computer handeln kann. Das elektronische Frachtpapiersystem 1 kann zudem eine Recheneinrichtung 5 eines Übergabepartners aufweisen. Es kann vorgesehen sein, dass Kopien elektronischer Frachtpapiere 6 auf dem fahrzeugexternen Zentralrechner 4 bereitgestellt werden. Diese können durch Recheneinrichtungen 5 eines Übergabepartners bereitgestellt und an den fahrzeugexternen Zentralrechner 4 übermittelt worden sein.

In einem ersten Schritt P1 kann der Protokolleinrichtung 2 ein elektronisches Frachtpapier 6 durch den fahrzeugexternen Zentralrechner 4 bereitgestellt werden. Das elektronische Frachtpapier 6 kann ein Frachtübergabegebiet 7 vorgeben, in dem ein Übergabevorgang der Fracht mit einem Übergabepartner erfolgen soll.

In einem Verfahrensschritt P2 kann durch die Protokolleinrichtung 2 fortlaufend eine momentane geographische Position des Fahrzeugs 2 erfasst werden. Zu diesem Zweck kann die Protokolleinrichtung 2 dazu eingerichtet sein, Signale satellitengestützter Navigationssysteme zu empfangen und auszuwerten, um die momentane Fahrzeugposition zu bestimmen. Die momentane Fahrzeugposition kann durch die Protokolleinrichtung 2 mit der Lage des Frachtübergabegebiets 7 verglichen werden. Sobald durch die Protokolleinrichtung 2 erfasst wird, dass sich die aktuelle geographische Position des Fahrzeugs 3 innerhalb des Frachtübergabegebiets 7 des Übergabepartners befindet, kann in einer einfachen Ausführung des Verfahrens in einem Schritt P3 ein vorbestimmtes Frachtübergabeereignis durch die Protokolleinrichtung 2 erfasst werden.

Es kann vorgesehen sein, dass das Frachtübergabeereignis nur durch die Protokolleinrichtung 2 erfasst wird, wenn zusätzlich zur Ankunft des Fahrzeugs 3 im Frachtübergabegebiet 7 durch eine Wiegeeinrichtung 8 des Fahrzeugs 3 eine Änderung eines Fahrzeuggewichts um ein vorbestimmtes Gewicht 9 erfasst wird

(P4). Das vorbestimmte Gewicht 9 kann beispielsweise in dem elektronischen Frachtpapier 6 gespeichert sein. Durch eine Änderung des Fahrzeuggewichts um das vorbestimmte Gewicht 9 kann durch die Protokolleinrichtung 2 erkannt werden, dass eine Beladung oder Entladung der Fracht stattgefunden hat.

Zusätzlich oder alternativ dazu kann es vorgesehen sein, dass das Frachtübergabeereignis nur durch die Protokolleinrichtung 2 erfasst wird, wenn durch die Protokolleinrichtung 2 eine vorbestimmte Benutzereingabe erfasst wird, durch die der Belade- oder Entladevorgang bestätigt wird (P5). Es kann beispielsweise vorgesehen sein, dass es sich dabei um eine Benutzereingabe des Fahrers über eine Tastatur der Protokolleinrichtung 2 handelt.

In einem Schritt P6 kann ein Übergabesignal 10 von der Protokolleinrichtung 2 an den fahrzeugexternen Zentralrechner 4 versandt werden, wenn das Übergabeereignis erfasst wurde. Dies kann beispielsweise über eine kabellose Verbindung erfolgen. Das Übergabesignal kann sowohl Informationen über das Übergabeereignis und eine digitale Signatur des Fahrers umfassen, als auch eine aktualisierte Fassung des elektronischen Frachtpapiers.

In einem Schritt P7 kann der Zentralrechner die auf ihm gespeicherten elektronischen Fahrzeugpapiere, die mit dem Übergabeereignis in Verbindung stehen um die in der aktualisierten Fassung des elektronischen Frachtpapiers 6 enthaltenen Informationen aktualisieren. Zudem kann die elektronische Signatur des Fahrers in das elektronische Frachtpapier 6 eingetragen werden.

In einem Schritt P8 kann durch den fahrzeugexternen Zentralrechner 4 an eine Recheneinrichtung 5 des Übergabepartners eine Bestätigungsaufforderung 11 versandt werden. Dies kann beispielsweise über ein kabelloses Netzwerk erfolgen. Die Bestätigungsaufforderung kann Details des Übergabeereignisses umfassen und dafür vorgesehen sein, den Übergabepartner zur Bestätigung des Übergabeereignisses aufzufordern.

In einem Schritt P9 kann durch die Recheneinrichtung 5 des Übergabepartners die Übergabe bestätigt werden. Dies kann durch eine vorbestimmte Benutzereingabe erfolgen oder vollautomatisch durch die Recheneinrichtung 5 des Übergabepartners, wenn durch diese ebenfalls die Warenübergabe erfasst wurde. Dies kann beispielsweise durch eine Änderung eines durch die Recheneinrichtung 5 verwalteten Lagerbestands um die betreffende Ware der Übergabe erfasst werden. Die Recheneinrichtung 5 kann ein Bestätigungssignal 12 an den Zentralrechner 4 versenden, um seinerseits die Übergabe zu bestätigen.

Das Frachtpapiersystem 1 kann ein mobiles Endgerät 14 umfassen.

In einem Schritt P10 kann durch den Zentralrechner an die Protokolleinrichtung oder ein sonstiges Gerät des Fahrers eine Nachricht versandt werden, dass der Übergabepartner das Übergabeereignis der Ware bestätigt hat.

Lösung im Falle von unvollständiger Fracht oder sonstiger Probleme: Automatischer Ablauf zur Handhabung von elektronischen Frachtpapieren (eCMR) einschließlich digitaler Signaturen an definierten Standorten.

Nach aktuellem Stand der Technik werden Frachtpapiere bei dem Transport mittels Nutzfahrzeugen unter anderem mittels eCMR (elektronischem Frachtpapier) abgewickelt. Dieser Prozess befindet sich derzeit in der Validierung / Ratifizierung verschiedener EU Mitgliedstaaten. Ein Plattform-Anbieter ermöglicht die Nutzung der eCMR. Die klassische Unterschrift des Fahrers, Versenders sowie Empfängers kann digital mittels Unterschrift auf Touchscreen (Sign on Glass) oder mittels QR Code (TFA-QR) erfolgen. Dies ermöglicht Echtzeit-Verfolgung der Fracht, Einsicht in die Lieferkette sowie geringeren Verwaltungsaufwand und -kosten.

Der Stand der Technik erfordert manuelle Interaktionen zwischen Versender, Transportunternehmen (Vertreten durch den Fahrer) und den Empfänger. Dies kann zu Unterbrechungen, Effizienzverlusten sowie Zeitverzögerungen führen. Insbesondere für spätere autonome Lieferketten muss dieser Prozess vollkommen automatisiert werden.

Die Erfindung beinhaltet die Automatisierung der Signaturprozesses für elektronische Frachtpapiere für sowohl den Versender, Empfänger als auch das Transportunternehmen (Vertreten durch den Fahrer). Somit ist ein vollautomatisches Handling von elektronischen Frachtpapieren möglich. Als besondere Ausprägung werden die Daten durch eine sichere Komponente, beispielsweise einen intelligenten Tachographen, erzeugt und für eine mobile Kommunikation an ein Backend zur Verfügung gestellt. Das Konzept wird anhand von drei Signaturstellen beschrieben:
Versender: Versenderadresse ist im elektronischen Frachtpapier hinterlegt und wird automatische bei Ankunft durch ein fahrzeugeigenes
Positionsbestimmungssystem, beispielsweise durch den intelligenten Tachographen, identifiziert. Optional kann ein bordeigenes Wiegesystem zusätzlich das Beladungsereignis durch eine sich zeitlich ändernde Gewichtsinformation oder die Eingabe der Beladung durch den Fahrer in einen intelligenten Tachographen sicher signalisieren. Dieses Ereignis wird einschließlich eines Datensatzes über eine mobile Kommunikationseinrichtung an das Backend übertragen und von dort über eine Schnittstelle an ein elektronisches Datenverarbeitungssystem des Versenders übertragen und eine Bestätigung eingefordert. Der Datensatz beziehungsweise der Datenprozess kann optional mit einer digitalen Signatur versehen werden, um die Integrität der Daten sicherzustellen. Der Versender hat somit den eCMR automatisch unterzeichnet.

Fahrer: Versenderadresse ist im elektronischen Frachtpapier hinterlegt und wird automatische bei Ankunft durch ein fahrzeugeigenes Positionsbestimmungssystem, beispielsweise durch den intelligenten Tachographen, identifiziert. Optional kann ein bordeigenes Wiegesystem zusätzlich das Beladungsereignis durch eine sich zeitlich ändernde Gewichtsinformation oder die Eingabe der Beladung durch den Fahrer in einen intelligenten Tachographen sicher signalisieren. In Folge dieses Ereignisses, wird die Beladungsbestätigung mit einer eindeutigen Identifikationsnummer sowie einem optionalen Datensatz wie Zeitstempel, Kilometerstand, Ereignis Beladen / Entladen an das Backend übertragen. Der Datensatz beziehungsweise der Datenprozess kann optional mit einer digitalen Signatur versehen werden, um die Integrität der Daten sicherzustellen. Der Fahrer muss hierfür z. B. einmalig eine Einwilligungsbestätigung bei dem Transportunternehmen unterzeichnen.

Empfänger: Empfängeradresse ist im elektronischen Frachtpapier hinterlegt und wird automatische bei Ankunft durch ein fahrzeugeigenes Positionsbestimmungssystem, beispielsweise durch den intelligenten Tachographen, identifiziert. Optional kann ein bordeigenes Wiegesystem zusätzlich das Entladungsereignis durch eine sich zeitlich ändernde Gewichtsinformation oder die Eingabe der Entladung durch den Fahrer in einen intelligenten Tachographen sicher signalisieren. Dieses Ereignis wird einschließlich eines Datensatzes über eine mobile Kommunikationseinrichtung an das Backend übertragen und von dort über eine Schnittstelle an ein elektronisches Datenverarbeitungssystem des Empfängers übertragen und eine Bestätigung eingefordert. Der Datensatz beziehungsweise der Datenprozess kann optional mit einer digitalen Signatur versehen werden, um die Integrität der Daten sicherzustellen. Der Empfänger hat somit den eCMR automatisch unterzeichnet.

Es können Effizienzsteigerungen von Logistikprozessen und vollkommene Automatisierung des eCMR beziehungsweise Frachtpapier-Prozesses sowie sicheres Handling des eCMR durch das Datenprozessieren in einer fahrzeugeigenen sicheren Komponente, beispielsweise einen intelligenten Tachographen, erreicht werden.

Das Verfahren ist auch für Frachtpapiere in anderen Transportbereichen sowie generell zur Automatisierung von Dokumentationsprozessen mit Signaturen verschiedener Personen anwendbar.

Der Fahrer hat die Möglichkeit mittels, eines Smart Devices (bspw. Bordcomputer mit Eingabemöglichkeit oder Tablet beziehungsweise Smartphone) einen Schaden, fehlende Ware oder sonstige Beanstandungen zu dokumentieren (mittels Bildern oder Texteingabe). Durch Auswahl des jeweiligen eCMR werden diese Eingabe zugeordnet und werden der gesamten Lieferkette über die bestehende Infrastruktur zur Verfügung gestellt (Versender, Fahrer, Empfänger). Ebenso werden die Daten dem Transportunternehmen zur Verfügung gestellt, sodass dies bei späterer Rechnungsstellung berücksichtigt werden kann.

Die Lösung zur Dokumentation von Schäden / Reklamationen kann z. B. bei Anbietern von eCMR Lösungen angewendet werden. Der Fahrer hat die Möglichkeit, über App oder Bordcomputer Fotos aufzunehmen und einen Vermerk zu erstellen, um dies auf dem eCMR zu dokumentieren.

Insgesamt zeigt das Beispiel, wie durch die Erfindung ein automatischer Ablauf zur Handhabung von elektronischen Frachtpapieren (eCMR) einschließlich digitaler Signaturen an definierten Standorten bereitgestellt werden kann.

## Patentansprüche

1. Verfahren zur automatischen Protokollierung einer Frachtübergabe in einem elektronischen Frachtpapiersystem (1), wobei
- das elektronische Frachtpapiersystem (1) zumindest eine Protokolleinrichtung (2) eines Fahrzeugs (3) und einen fahrzeugexternen Zentralrechner (4) umfasst,
- in dem elektronischen Frachtpapiersystem (1) ein geographisches Frachtübergabegebiet (7) eines Übergabepartners gespeichert wird,
- durch die Protokolleinrichtung (2) des Fahrzeugs (3) fortlaufend eine momentane geographische Position des Fahrzeugs (3) erfasst wird,
- durch das elektronische Frachtpapiersystem (1) eine Ankunft des Fahrzeugs (3) in dem geographischen Frachtübergabegebiet (7) des Übergabepartners erfasst wird,
**dadurch gekennzeichnet, dass** ein Übergabesignal (10) von der Protokolleinrichtung (2) des Fahrzeugs (3) an den fahrzeugexternen Zentralrechner (4) ausgesandt wird, wenn ein vorbestimmtes
Frachtübergabeereignis, das zumindest die Ankunft des Fahrzeugs (3) in dem geographischen Frachtübergabegebiet (7) des Übergabepartners umfasst, durch das elektronische Frachtpapiersystem (1) erfasst wird, und
bei Empfang des Übergabesignals (10) durch den fahrzeugexternen Zentralrechner (4) ein Ereignissignal von dem fahrzeugexternen Zentralrechner (4) an eine Recheneinrichtung (5) des Übergabepartners versandt wird.

2. Verfahren zur automatischen Protokollierung einer Frachtübergabe in einem elektronischen Frachtpapiersystem (1) nach Anspruch 1, **dadurch gekennzeichnet, dass**
- das geographische Frachtübergabegebiet (7) in der Protokolleinrichtung (2) gespeichert wird,
- durch die Protokolleinrichtung (2) des Fahrzeugs (3) die Ankunft des Fahrzeugs (3) in dem geographischen Frachtübergabegebiet (7) des Übergabepartners erfasst wird,
- das Übergabesignal (10) von der Protokolleinrichtung (2) des Fahrzeugs (3) an den fahrzeugexternen Zentralrechner (4) ausgesandt wird, wenn das vorbestimmte Frachtübergabeereignis durch die Protokolleinrichtung (2) des Fahrzeugs (3) erfasst wird.

3. Verfahren zur automatischen Protokollierung einer Frachtübergabe in einem elektronischen Frachtpapiersystem (1) nach Anspruch 1, **dadurch gekennzeichnet, dass**
- das geographische Frachtübergabegebiet (7) in dem fahrzeugexternen Zentralrechner (4) gespeichert wird,
- durch die Protokolleinrichtung (2) des Fahrzeugs (3) fortlaufend die momentane geographische Position des Fahrzeugs (3) an den fahrzeugexternen Zentralrechner (4) versandt wird,
- durch den fahrzeugexternen Zentralrechner (4) die Ankunft des Fahrzeugs (3) in dem geographischen Frachtübergabegebiet (7) des Übergabepartners erfasst wird,
- durch den fahrzeugexternen Zentralrechner (4) ein Ankunftssignal über die Ankunft in dem geographischen Frachtübergabegebiet (7) an die Protokolleinrichtung (2) des Fahrzeugs (3) übersandt wird,
- die Protokolleinrichtung (2) des Fahrzeugs (3) das Ankunftssignal empfängt und dadurch dazu eingestellt wird, das Übergabesignal (10) von der Protokolleinrichtung (2) des Fahrzeugs (3) an den fahrzeugexternen Zentralrechner (4) auszusenden, wenn das vorbestimmte Frachtübergabeereignis durch die Protokolleinrichtung (2) des Fahrzeugs (3) erfasst wird.

4. Verfahren nach einem der vorhergehenden Ansprüche, **dadurch gekennzeichnet, dass** das Frachtübergabeereignis eine manuelle Bestätigung in der Protokolleinrichtung (2) umfasst.

5. Verfahren nach einem der vorhergehenden Ansprüche, **dadurch gekennzeichnet, dass** das Frachtübergabeereignis eine Erfassung einer vorbestimmten Gewichtsänderung des Fahrzeugs (3) durch eine Wiegeeinrichtung (8) des Fahrzeugs (3) umfasst.

6. Verfahren nach einem der vorhergehenden Ansprüche, **dadurch gekennzeichnet, dass** durch die Recheneinrichtung (5) des Übergabepartners bei Empfang des Ereignissignal eine Versendung eines Bestätigungssignals (12) an den fahrzeugexternen Zentralrechner (4) angefordert wird, um die Übergabe durch den Übergabepartner zu bestätigen.

7. Verfahren nach Anspruch 6, **dadurch**
**gekennzeichnet, dass** durch den fahrzeugexternen Zentralrechner (4) bei Empfang des Bestätigungssignals (12) ein Antwortsignal (13) an die Protokolleinrichtung (2) des Fahrzeugs (3) versandt wird.

8. Verfahren nach einem der vorhergehenden Ansprüche, **dadurch gekennzeichnet, dass** das Übergabesignal (10) eine Fahrerkennung umfasst.

9. Verfahren nach einem der vorhergehenden Ansprüche, **dadurch gekennzeichnet, dass** das Übergabesignal (10) eine Übergabekennung umfasst.

10. Verfahren nach einem der vorhergehenden Ansprüche **dadurch gekennzeichnet, dass** die Protokolleinrichtung (2) eine Tachographeneinrichtung ist.

11. Verfahren nach einem der vorhergehenden Ansprüche, **dadurch gekennzeichnet, dass** die Protokolleinrichtung (2) eine Telematikeinrichtung umfasst.

12. Protokolleinrichtung (2) zur automatischen Protokollierung einer Frachtübergabe in einem elektronischen Frachtpapiersystem (1), wobei die Protokolleinrichtung (2) dazu eingerichtet ist,
- ein geographisches Frachtübergabegebiet (7) eines Übergabepartners zu speichern,
- fortlaufend eine momentane geographische Position des Fahrzeugs (3) zu erfassen,
- eine Ankunft des Fahrzeugs (3) in dem geographischen Frachtübergabegebiet (7) des Übergabepartners zu erfassen,
**dadurch gekennzeichnet, dass** die Protokolleinrichtung (2) dazu eingerichtet ist, ein Übergabesignal (10) an einen fahrzeugexternen Zentralrechner (4) auszusenden, wenn ein vorbestimmtes Frachtübergabeereignis, das zumindest die Ankunft des Fahrzeugs (3) in dem geographischen Frachtübergabegebiet (7) des Übergabepartners umfasst, durch die Protokolleinrichtung (2) des Fahrzeugs (3) erfasst wird.

13. Fahrzeug (3) umfassend eine Protokolleinrichtung (2) nach Anspruch 12.
